# EUROPEAN PATENT SPECIFICATION

(11) **EP 2 870 508 B1**
(45) Date of publication and mention of the grant of the patent: **19.12.2018**
(21) Application number: 13813199.0
(22) Date of filing: 26.06.2013
(51) Int. Cl.: G03B 17/56, H04N 5/225

(54) **CAMERA ISOLATORS AND SWING HEADS**
KAMERAISOLATOREN UND SCHWINGKÖPFE
ISOLATEURS ET TÊTES OSCILLANTES DE CAMÉRA

(30) Priority: 03.07.2012 US 201213540907; 05.07.2012 US 201213542339; 02.04.2013 US 201313855485
(43) Date of publication of application: 13.05.2015
(73) Proprietor: Chapman/Leonard Studio Equipment, Inc., North Hollywood California 91605 (US)
(72) Inventor: CHAPMAN, Leonard, T., North Hollywood, California 91605 (US)
(74) Representative: Schaumburg und Partner Patentanwälte mbB
(86) International application number: PCT/US2013/047976
(87) International publication number: WO 2014/008070

(56) References cited:
- FR-A- 1 586 700
- JP-A- S5 872 746
- JP-A- 2004 340 372
- JP-A- 2009 180 764
- US-A- 3 703 999
- US-A- 5 595 371
- US-A1- 2005 232 625
- US-A1- 2006 239 678
- US-A1- 2010 301 164

## Description

### FIELD OF THE INVENTION

The invention relates to an isolator according to the preamble of claim 1. When filming or recording images, it is often necessary to smoothly move the camera over a floor or ground surface. Even small amounts of shock or vibration can result in images that are shaky, erratic or blurred. Consequently, it is necessary to provide a steady platform for the camera by isolating the camera from shock and vibration. It may also be necessary to quickly re-orient the camera, to change the lens position, without excessively delaying filming. It is an object of the invention to provide an improved shock and vibration isolator, and an improved swing head, for use with a camera.

An isolator of the initially-mentioned type is known, e.g., from FR 1 586 700 A. Further isolators are disclosed in JP S58 72746, US 3 702 999A, and US 5 595 371 A.

### BRIEF STATEMENT OF THE INVENTION

The invention provides an isolator according to claim 1. Further embodiments of the invention are described in the dependent claims. In the new isolator design, a top plate is attached to a bottom plate via a universal joint that allows the top plate to pivot about two mutually perpendicular axes relative to the bottom plate. A camera attachment fitting, such a Mitchell mount fitting, is provided on the top plate, for attaching a camera or camera accessory to the top plate. A threaded fitting is be provided on the bottom plate, for attaching the isolator to a supporting structure, such as the arm of a camera crane or camera dolly, or to an intermediate accessory such as a riser, drop-down, extension, etc. Springs and dampeners are positioned between the top and bottom plates. The dampeners may be adjustable to match the dampening provided with the load on the isolator.

### BRIEF DESCRIPTION OF THE DRAWINGS

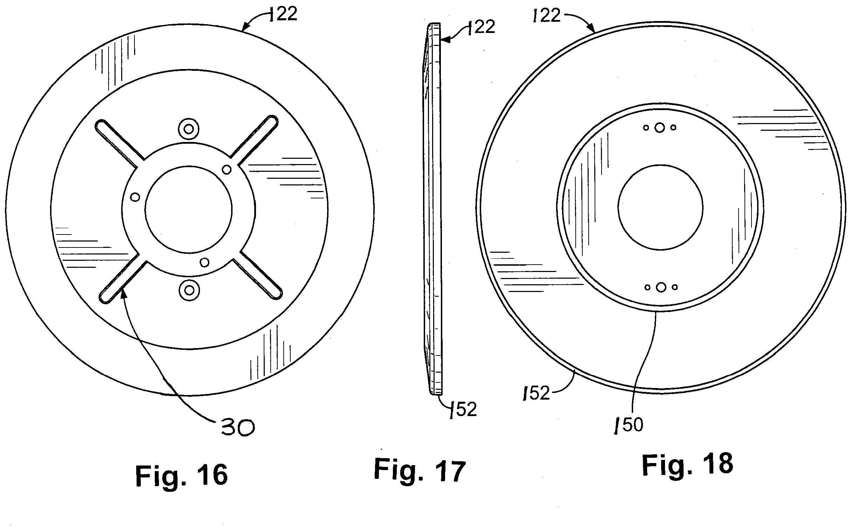

The embodiments of Figs. 14-26 as such do not form embodiments of the claimed invention, but may help explaining the invention.
Fig. 1 is a perspective view of a shock and vibration isolator attached to the arm of a camera dolly and supporting a camera, according to an embodiment of the invention.
Fig. 2 is an exploded perspective view of the isolator shown in Fig. 1..
Fig. 3 is a perspective view of the isolator shown in Figs. 1 and 2, with the top plate removed for purpose of illustration.
Fig. 4 is a side view of the isolator of Fig. 1 shown at a maximum tilt angle AA.
Fig. 5 is a perspective view of the isolator shown in Fig. 1.
Fig. 6 is a top view of the base plate of the isolator as shown in Fig. 2.
Fig. 7 is a bottom view of the base plate shown in Fig. 6.
Fig. 8 is a top view of the top plate as shown in Fig. 5.
Fig. 9 is a bottom view of the top plate as shown in Fig. 8.
Fig. 10 is a section view of one of the dampeners shown in Figs. 2 and 3.
Fig. 11 is a side view of a spring assembly before assembly into the isolator as shown in Fig. 2.
Figs. 12 and 13 are side and section views of the spring assembly during assembly into the isolator shown in Figs. 1-5.
Fig. 14 is section view of another isolator.
Fig. 15 is a perspective view of the top and bottom plates and the universal joint of the isolator shown in Fig. 14.
Fig. 16 is a top view of the top plate shown in Figs. 14 and 15
Fig. 17 is a side view of the top plate shown in Fig. 16.
Fig. 18 is a bottom view of the top plate shown in Figs. 14 and 15.
Fig. 19 is a side view of an alternative of the horizontal axis isolator shown in Fig. 14.
Fig. 20 is a perspective side view of a camera leveling head.
Fig. 21 is a side and bottom perspective view of the camera leveling head of Fig. 20 with a swing head attached to the leveling head.
Fig. 22 is a top perspective view of the swing head shown in Fig. 20.
Fig. 23 is a top view in part section of the swing head shown in Figs. 20-22.
Fig. 24 is a section view taken along line 24-24 of Fig. 23.
Fig. 25 is a partial section view detail of the lever shown in Figs. 21-23.
Fig. 26 is section view taken along line 26-26 of Fig. 25.

### DETAILED DESCRIPTION OF THE DRAWINGS

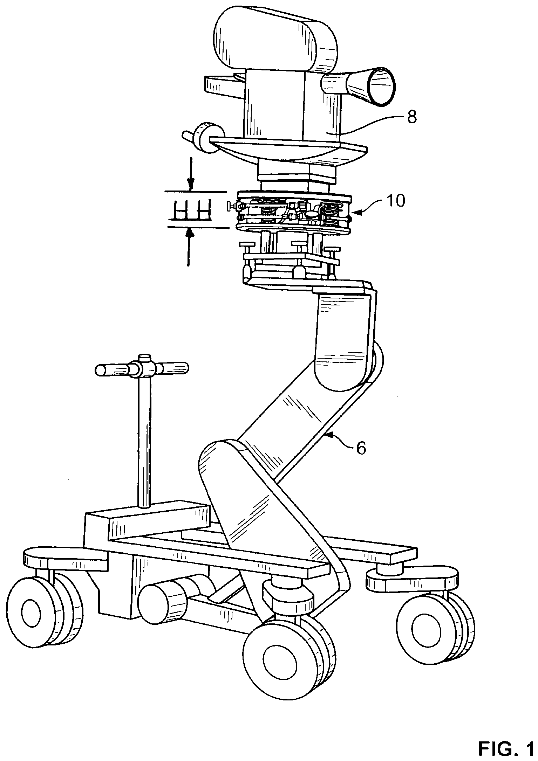

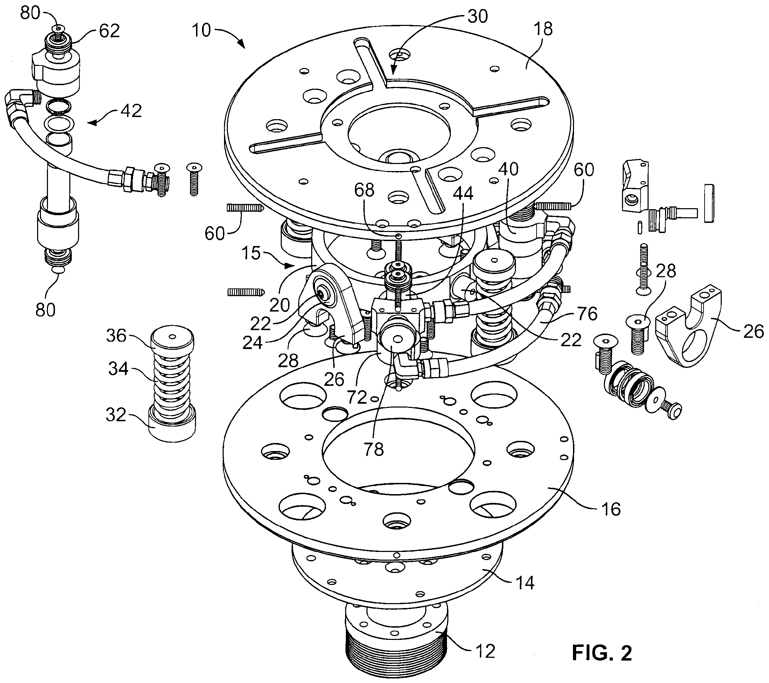

A shown in Fig. 1, an isolator 10 may be supported on a camera dolly 6 or a camera crane, to isolate a camera 8 from shock and vibration. As shown in Fig. 2, in the isolator 10 a top plate 18 is attached to a bottom plate 16 via a universal joint 15. The isolator may be attached to a camera dolly 6 or camera crane arm using a hollow threaded stud 12 attached to a stud plate 14 on the bottom plate 16.

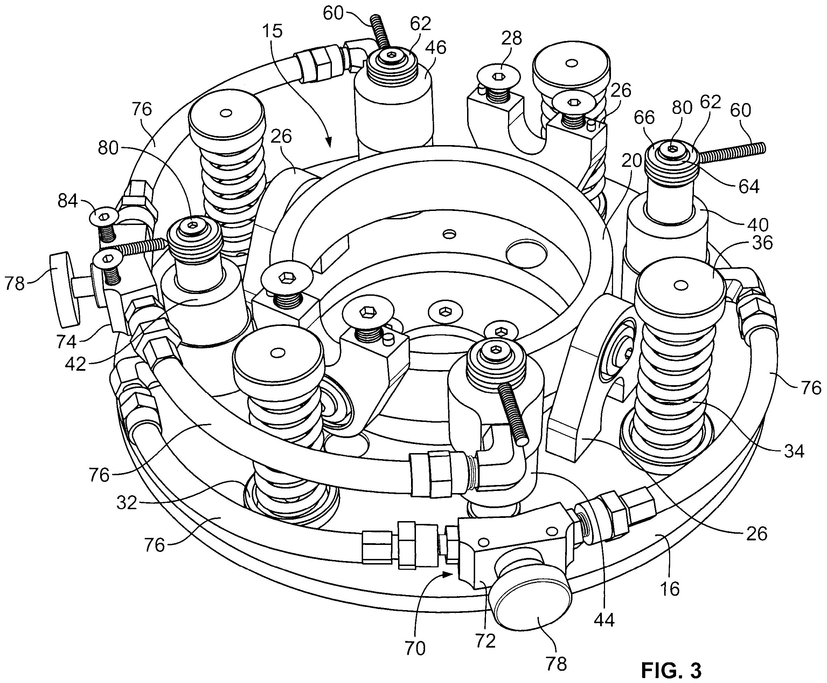

Figs 2 and 3 show an example of a universal joint 15 having an axle ring 20 with lateral and longitudinal axles 22 that are pivotally attached to lateral and longitudinal arms 26, respectively. The arms may attach to the axles through bearings 24. In the example shown, the lateral arms 26 are attached to the bottom plate 16 and the longitudinal arms 26 are attached to the top plate 18, using flathead bolts 28. Other types of universal joints may also be used.

The universal joint 26 allows the top plate 22 to pivot about lateral and longitudinal axes relative to the bottom plate 24. The limit of pivoting movement may vary depending on several factors. In the design shown, pivoting movement may be limited to about +/- 15 or 12 degrees. The four axles 22 are equally spaced apart on the circumference of the ring 20. The terms lateral and longitudinal are used here for description only, as plates 16 and 18 and the universal joint 15 may be symmetrical about any centerline or diameter.

As shown in Figs. 2 and 3, springs 34 are attached to the top plate 18 and to the bottom plate 16 and bottom plates. Four equally spaced apart springs 34 may be used, with each spring 34 having a spring foot 32 and a spring cap 36. The spring foot 32 of each spring 34 may be threaded, pressed or bolted onto the bottom plate 16, with Fig. 2 showing a design having holes for pressing the feet 32 into the bottom plate 16. The spring cap 36 of each spring 34 may held against the bottom surface of the top plate 18 via spring force, with the spring 34 compressed between the plates 16 and 18. Alternatively, flathead bolts extending through holes in the top plate 18 may thread into the spring caps 36, so that both the lower and upper ends of the springs are positively attached to the bottom and top plates, respectively. The springs are compressed or preloaded between the plates when the isolator 10 is assembled. The springs exert an outward, compressive force acting on the plates tending to hold or return the top plate to the level position shown in Fig. 2, where the top plate is parallel to the bottom plate. Although four springs are shown, designs with three springs, or five or more springs may also be used. A resilient material, such as blocks or a continuous ring of resilient material, may optionally be used in place of or in addition to use of the typically steel individual coil compression springs shown.

Also as shown in Figs. 2 and 3, first, second, third and fourth dampeners, 40, 42, 44 and 46 are positioned between the plates 16 and 18. The first dampener 40 is paired with the second dampener 42, and the third dampener 44 paired with the fourth dampener 46, with each pair of dampeners on perpendicular diameters of the top or bottom plate. Since the dampeners are generally rigid, unlike the springs 34, and since the dimensions and angles between the plates 16 and 18 change during use of the isolator 10, the dampeners, unlike the springs, cannot be bolted or otherwise rigidly attached directly to the plates. Rather, the upper and lower ends of the dampeners may be attached to the top and bottom plates via ball swivel bearings 62, or similar devices allowing for movement in two axes.

Referring to Fig. 2, in this example flathead bolts 80 extend through holes in the plates and attach to an inner ball 64 of the swivel bearings 62, attaching the upper and lower ends of the dampeners to the top and bottom plates 16 and 18. The collar 66 surrounding the inner ball of each swivel bearing 62 may be attached to the top or bottom plate via a set screw 60 threaded into a radial hole at the outer perimeter of the plate. This allows for a compact design, with the isolator having a height HH in Fig. 1 that may be minimized down to about 7-12 or 8 -15 cm.

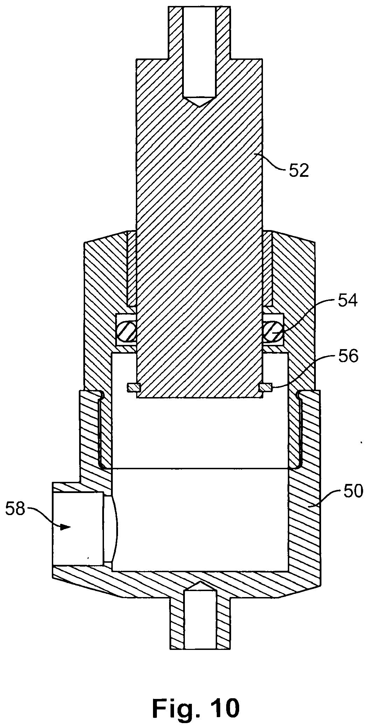

Fig. 10 shows one type of dampener that may be used having a piston 52 that moves into and out of a fluid-filled cylinder 50. The piston may slide through a seal 54 that seals the fluid in. A stop ring 56 limits outward movement of the piston 52. Each of the dampeners may use this design.

As shown in Figs. 2 and 3 a dampener adjustment system 70 may include first and second valves 72 and 74, such as needle valves, each having a control knob or lever 78. Hoses 76 connect to the ports 58 of the first dampener 40 and the third dampener 44 to the first valve 72. Similarly, hoses 76 connect the ports 58 of the second dampener 42 and the fourth dampener 46 to the second valve 74. Optionally, a single valve having four ports may be used instead of the two separate valves shown.

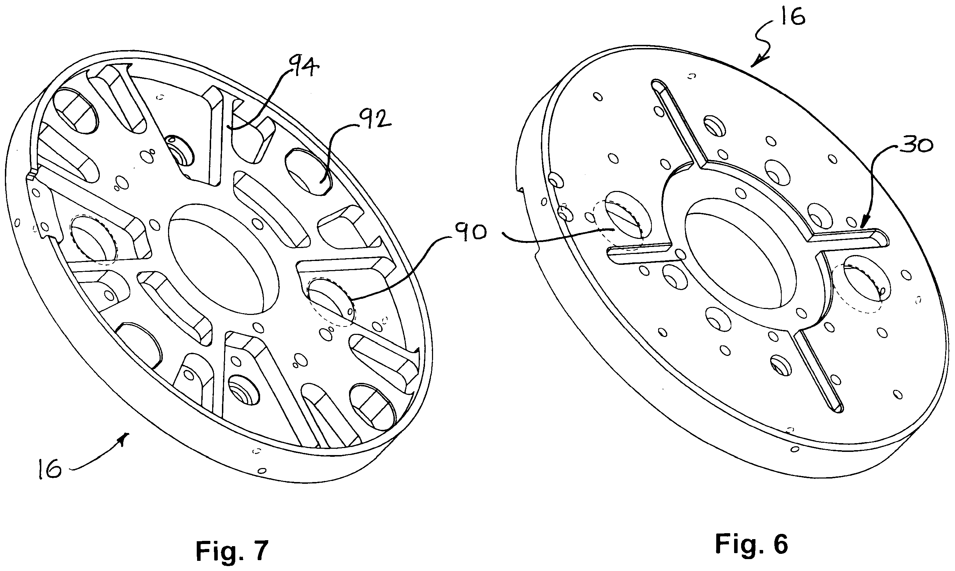

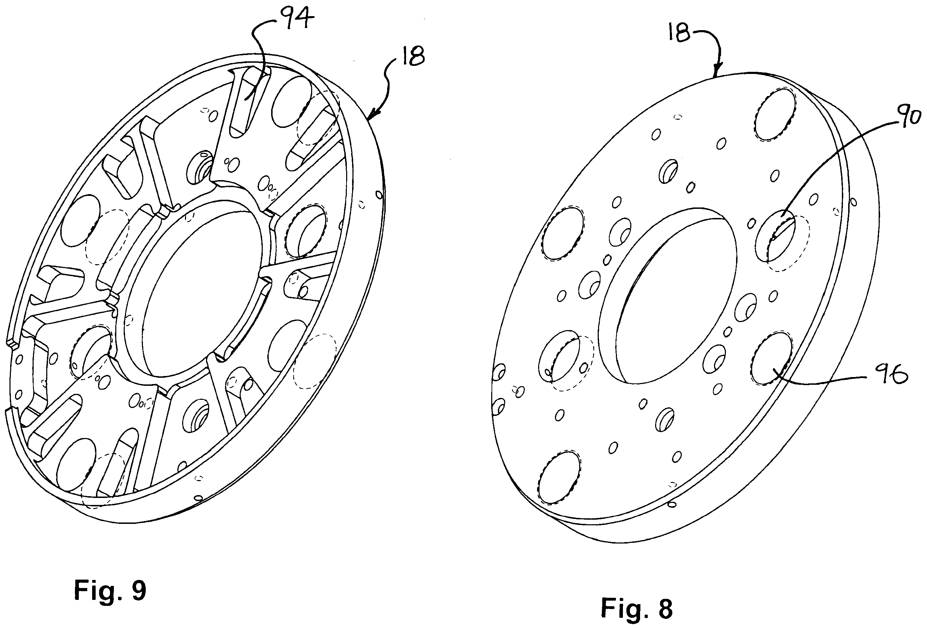

Referring to Figs. 6 and 8, threaded outer collar holes 90 may be provided in the base plate 16 and the top plate 18 for attaching the outer collar 66 of the dampeners 40, 42, 44 and 46. The base plate 16 and the top plate 18 may have webs 94 or similar structural elements to reduce bending under load and to raise their resonant frequencies. The plates may also have counterbores or sockets 92 and 96 for receiving the spring caps 36 and spring feet 32

As shown in Fig. 2, a fitting or feature 30 may be provided on the top plate 18, to allow a camera or a camera accessory to be conveniently attached to the top plate. The fitting 30 may be a Mitchell mount, which is a standard fitting well known in the motion picture industry. Other types of fittings may of course optionally be used. The top and bottom plates may be round and have the same diameter, ranging from about 18 to 30 cm. The top surface of the top plate may be flat, with no projections or protrusions, to allow a camera or any accessory (such as a pan head, tilt head, riser, etc.) to be attached without interference.

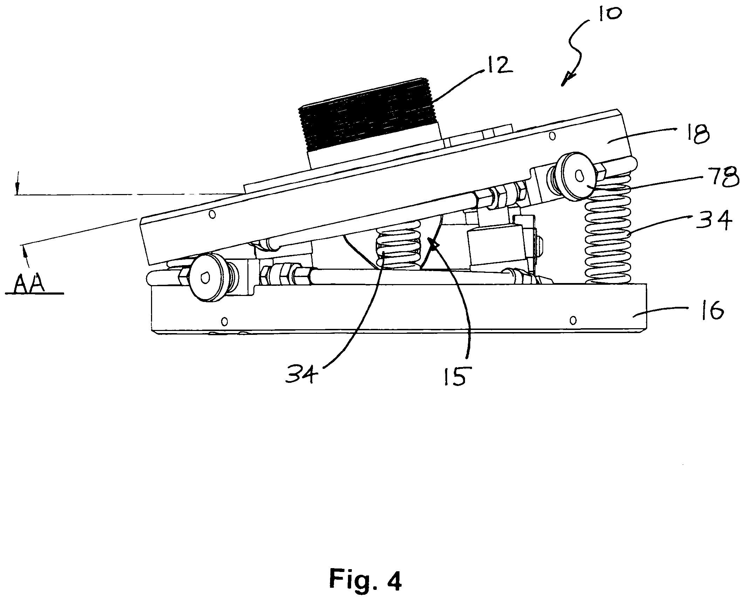

In use, the camera (and optionally accessories) i.e., the payload, is attached onto the top plate 18. The valves 72 and 74 are adjusted by turning the knobs 78 to increase or decrease the amount of dampening provided by the isolator 10, based on the weight of the payload. By matching the amount of dampening to the payload weight, the isolator is able to better isolate the camera from shock and vibration. Fig. 4 shows the top plate 16 and base plate 18 displaced to a maximum tilt angle AA, which generally ranges from 8-16 or 10-12 degrees. The terms top plate and base or bottom plate may be used interchangeably depending on whether the isolator 10 is arranged in an underslung or overslung position, i.e., whether the structure to which the isolator 10 is attached using the stud 12 is above or below the isolator 10.

For a lightweight payload where minimal dampening is preferred, the valves 72 and 74 may be fully open. This allows fluid to more freely flow between the pairs of dampeners 40 and 44, and 42 and 46, providing relatively little dampening. For a heavy payload, the valves 72 and 74 may be partially closed. This restricts flow of fluid between the pairs of dampeners which increases dampening. The valves may also be fully closed during set up, so that the top plate is virtually rigidly fixed in position relative to the bottom plate, and relative to the dolly or other support.

With the valves 72 and 74 providing a desired amount of dampening, when the top plate 18 is displaced from level due a shock or vibration impulse, the springs 34 act to quickly return it to level. The dampeners dampen the initial displacement and also the return movement, and help to reduce or avoid overshooting or resonance.

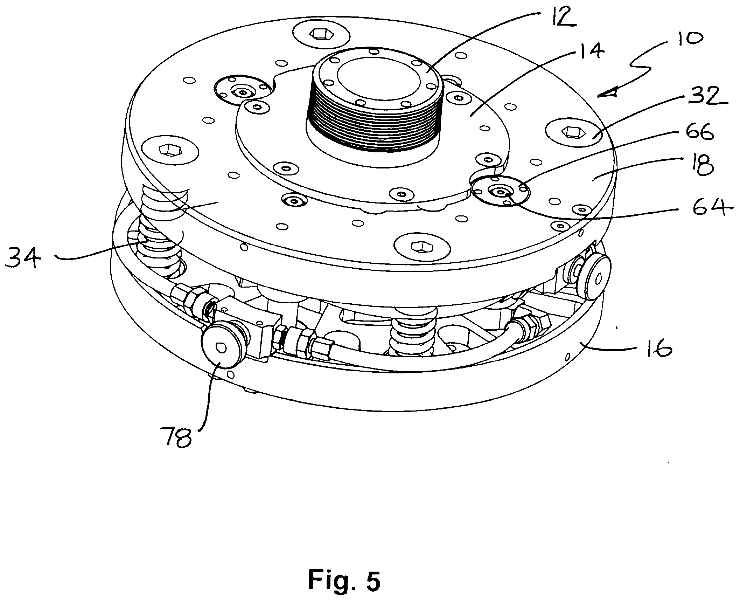

It is also possible to provide a separate valve on each individual dampener. In this alternative design no fluid lines between dampeners are needed. Rather, a valve on each dampener may be provided with a visual scale, for example numbers 1-10. The dampening of each dampener may then be individually set, with the dampeners on opposite sides preferably adjusted to the same numerical setting, to provide an equal amount of dampening in the up and down directions. Although this design requires adjusting four separate dampening elements, as opposed to only two with the design shown in Figs. 1-13, it may require fewer components.

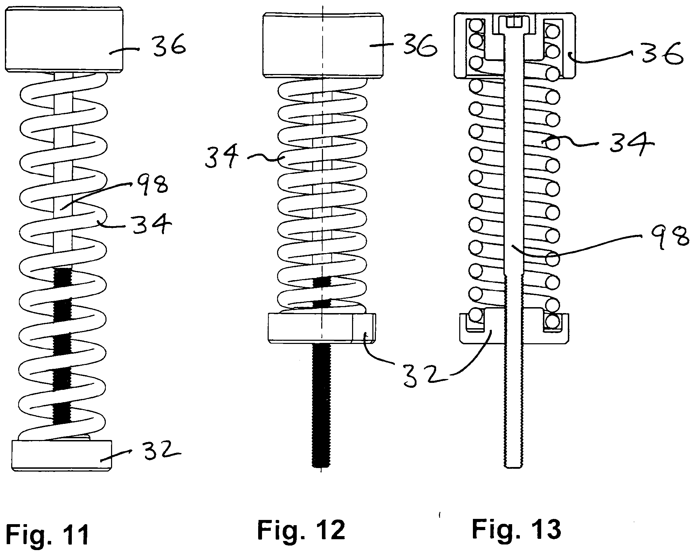

As shown in Figs. 11-13, each spring 34 may be initially compressed for installation between the plates 16 and 18 by a spring screw 98 extending through the spring cap 36 and threaded into the spring foot 32. This allows the spring 34 to be easily compressed from an unloaded condition shown in Fig. 11, to a compressed condition shown in Figs. 12 and 13. The spring screw 98 holds the spring in compression while the spring assembly is installed between the plates. The spring screw 98 is then removed leaving the spring in compression between the plates.

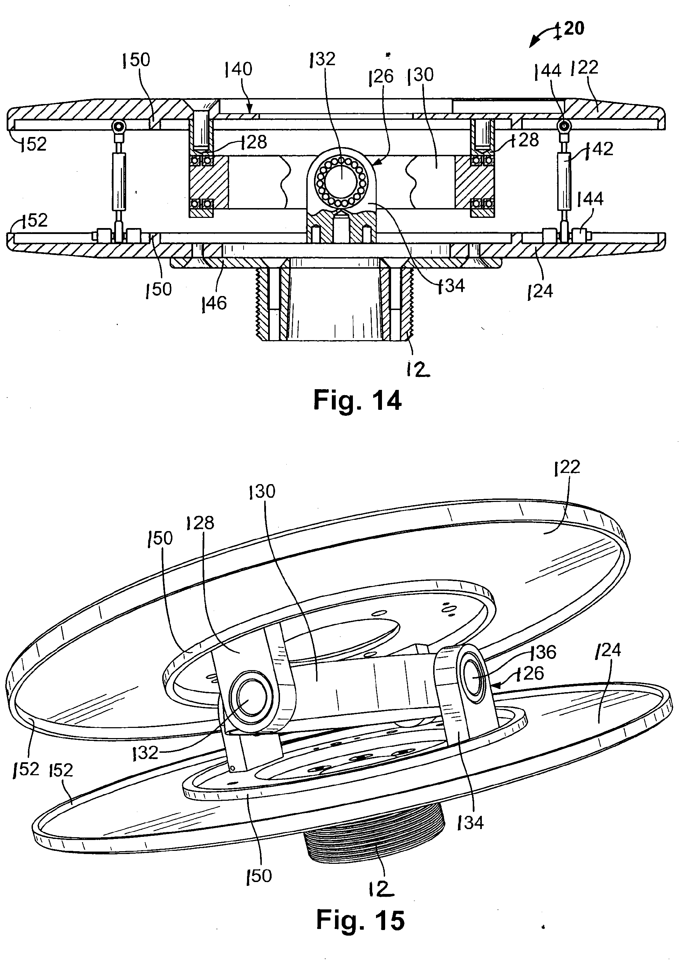

Fig. 15 shows an example of a universal joint 124 having upper arms 128, or lateral arms, extending down from a bottom surface of the top plate, and lower arms 134, or longitudinal arms 134 extending up from a top surface of the bottom plate. An axle ring 130 has lateral and longitudinal axles that are pivotally attached to the lateral and longitudinal arms, respectively. The arms may attach to the axles through bearings. Other types of universal joints may also be used.

The universal joint 126 allows the top plate 122 to pivot about lateral and longitudinal axes relative to the bottom plate 124. The limit of pivoting movement may vary depending on several factors. In the design shown, pivoting movement may be limited to about +/- 15 or 12 degrees.

As shown in Fig. 14, dampener/spring elements 142 are pivotally attached to the top and bottom plates via pivot attachments 144. The dampener/spring elements 142 may be spring loaded shock absorbers. If used, the spring loaded shock absorbers exert an outward, compressive force acting on the plates tending to hold or return the top plate to the level position shown in Fig. 14, where the top plate is parallel to the bottom plate. The spring loaded shock absorbers may also have gas or liquid viscous dampening, to dampen movement of the top plate relative to the bottom plate. Other forms of dampener/spring elements may also be used. For example, separate spring elements, and separate dampening elements may be used. In the example shown in Fig. 14, four equally spaced apart spring loaded shock absorbers are used. The dampener/spring elements 142 are omitted from Fig. 15 for purpose of illustration.

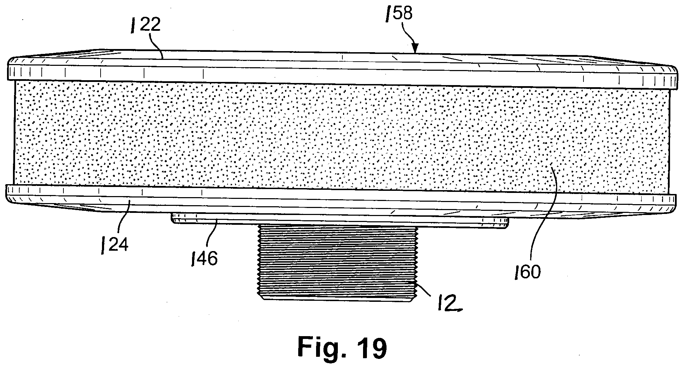

As shown in Figs. 14-15, the top and bottom plates may have inner rims 150 and outer rims 152. As shown in Fig. 19, the dampener/spring element 142 may optionally be provided as one or more pieces of a resilient material, such as open cell foam, or foam rubber. In this case, the resilient material can also be in the form of a ring 160 which is held between the plates via the inner and outer rims 150 and 152. With the ring 160 captive between the plates, the ring need not be adhered to either plate, allowing for easier manufacture of the isolator, and replacement of the ring. In the embodiments shown in Figs. 14 and 19, the rims may be omitted.

Figs. 14 and 19 show scale drawings of the isolator 120 with all elements shown in proper proportion. Setting aside the Mitchell mount 30 and hole patterns, the top and bottom plates may optionally be the same. As shown in Fig. 19, the top and/or bottom plate may have a flat central area and an angles or tapering outer annular section, leading out to an outer rim 152, if used. The rim 152 on one or both plates may be used to help hold ring 160 or resilient material in place.

If used, the ring 160, or other shapes of resilient materials, may be preloaded by compressing it between the plates. Pre-loading the resilient material insures that it will provide adequate force to quickly return the load to a level position. The resilient material may be a combination of materials such as urethane foam, foam rubber, others. These types of resilient materials have both spring and dampening characteristics. Consequently, when the top plate 122 is displaced from level due a shock or vibration impulse, the resilient material acts to quickly return it to level, via the materials spring characteristic, with little or no overshooting or resonance, via the materials dampening characteristics.

When the resilient material is compressed between the plates to provide pre-loading, it may tend to radially bulge out at the sides. Optionally, and elastic retainer or strap may encircle the resilient material, to provide a higher material spring constant. Different types and shapes of resilient material may be used for handling different loads. A resilient material between the plates may also be used in combination with the dampener/spring elements 142 shown in Fig. 14.

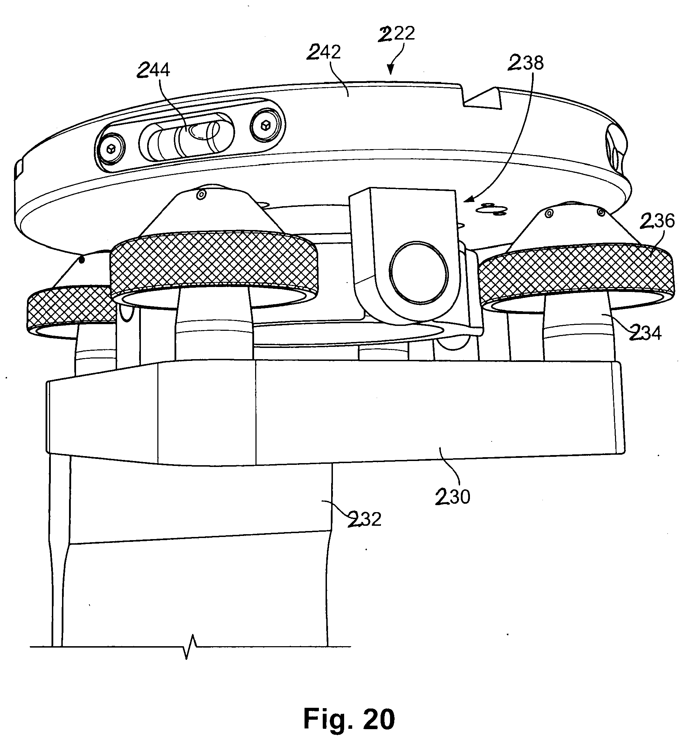

Figs. 20-26 show a leveling head on a swing head. As shown in Fig. 20, a leveling head 222 is includes a level plate 242 attached to a base or nose plate 230 of a nose bracket 224 via a universal joint 238. A nose arm 232 of the nose bracket may be attached to the arm or a camera crane or a camera dolly. The universal joint 238 allows the level plate 242 to pivot about lateral and longitudinal axes. The level plate 242 may be leveled using thumbwheels 236 attached to jack screws 234. Bubble levels 244 may be provided on the level plate 242 to provide visual indicators of the position of the level plate 242.

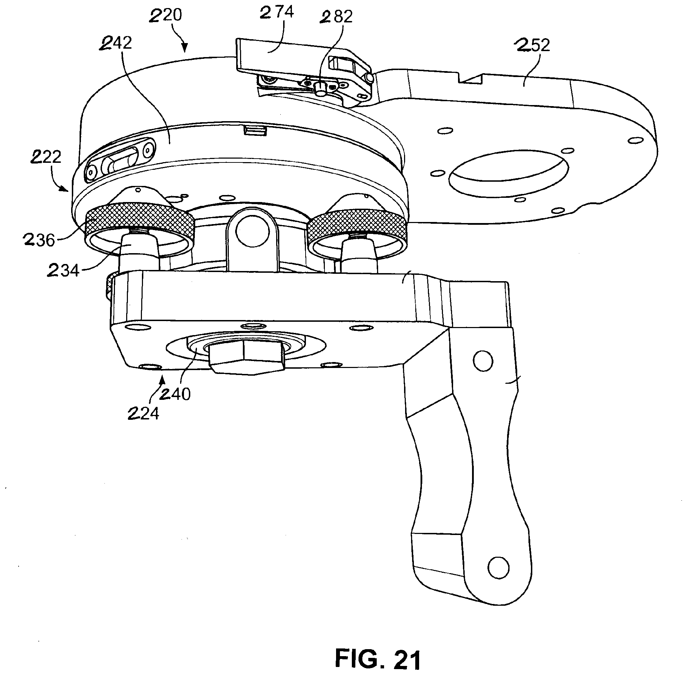

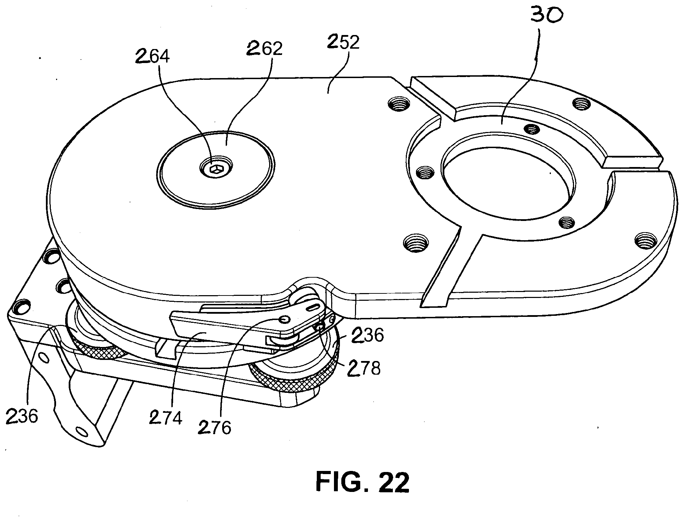

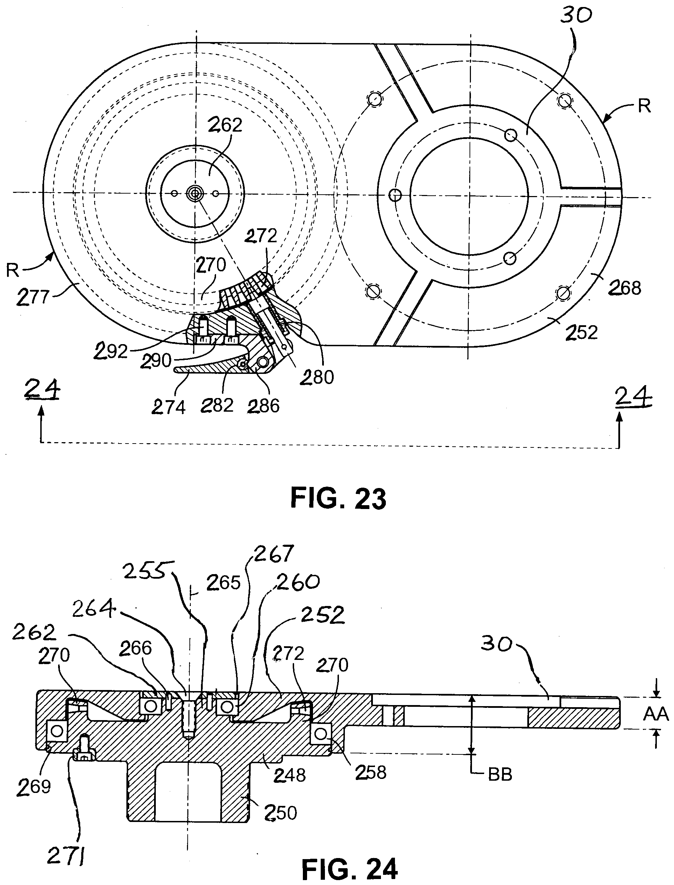

As shown in Figs. 21 and 22, a swing head 220 may be attached to the level plate 242. Alternatively the swing head 220 may be attached directly to another supporting structure, without using the leveling head. As shown in Figs. 23 and 24, the swing head 220 has a swing plate 252 rotatably attached to a hub 248. The hub 248 may include a threaded stud 250, allowing the hub2 48 to be attached to the level plate 242 by passing a bolt tube 240, shown in Fig. 21, up through holes in the nose plate 230 and the level plate 242, with the bolt tube 240 threaded onto the stud 250 of the hub 248. The threaded stud 250 may have a standard 70 mm diameter, with a key 271 on a bottom surface of the hub 248 engaging into a slot on the level plate 242, or other supporting surface, to prevent the hub 248 from rotating.

Referring once again to Figs. 23 and 24, the swing plate 252 may be an oval, with straight sides and rounded opposite ends optionally having the same radius of curvature. Referring to Fig. 24, an outer bearing 258 is positioned on or around a hole ring 270 on the hub 248. A seal such as an o-ring may be used to provide a low-friction seal between the hub 248 and the swing plate 252, to seal the outer bearing 258 from the environment. The outer bearing 258 may have a diameter equal to 85 to 100% of the outer diameter of the hub 248. Fig. 24 shows a design with the outer bearing 258 having a diameter equal to (i.e., 100% of) the outer diameter of the hub. This increase the load carrying capacity of the swing head 220.

The hole ring 270 has radially spaced apart holes 272. The holes 272 may be tapered holes and may also be evenly spaced apart. Each hole 272 is aligned on an axis, or radius, extending through a swing axis 265. An inner bearing 260 is positioned on or around a center post 255 on the hub 248. The swing plate is rotatably attached to the hub via the inner and outer bearings 258 and 260, which may optionally be pressed onto or into the hub or the swing plate 252. A cap plate 262 may be secured over the inner bearing 260 using a cap bolt 264, with cap pins 266 locking the cap plate 262 onto the center post 255, and preventing the cap plate from rotating with the swing head. A o-ring or similar seal element may be lightly pressed into the gap between the cap plate 262 and the swing pate 252, to seal the inner bearing 260 from the environment. The inner end 275 of the swing plate may have a radius of curvature R, equal to the radius of curvature of the outer end 268. The swing plate 252 may have a length equal to about 3-6 R, or longer, with the example shown having a length of about 3.5 to 4 R.

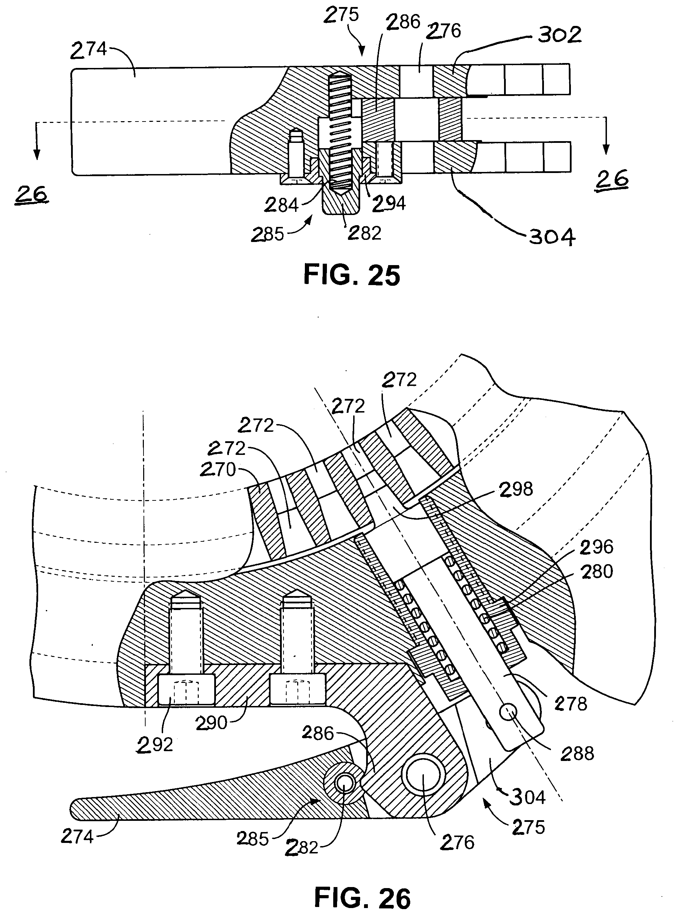

As shown in Figs. 25 and 26, a rotation indexing and locking assembly generally indicated at 275 allows the swing head 252 to be quickly and easily rotated to a desired azimuth position, and then locked into position. The assembly 275 includes a lever 274 pivotally attached to a side of the swing plate 252 on a pivot pin 276. The pivot pin 276 may be attached to a lever bracket 290 that is attached onto the swing plate using bolts 292. A plunger 278 may have a tapered inner end 298 and an outer end pivotally attached to front end of the lever 274 via a plunger pin 288. A plunger spring 280 urges the plunger radially inwardly towards the swing axis 265. A spring tube 296 may be threaded into the swing plate 252 to hold the plunger spring in place.

Referring to Fig. 25, a cam or protrusion 286 is provided on the swing plate 252, or on the lever bracket 290, if used, and is shown in Fig. 25 positioned centrally in between an upper arm 302 and a lower arm104 of the lever 274. A release pin 282 is captured within the lever 274 via release cap plate 294. The release pin is urged outwardly (or down as shown in Figs. 21 and 26) by a release spring 284.

In use, the nose bracket 224 or similar accessory is attached to the arm of a camera support, such as a camera crane or camera dolly 6, optionally using the leveling head 222. If the leveling head is used, the level plate 242 is leveled using the jack screws 234. A camera is attached to the swing plate 252 via the fitting 30. The swing head 220 has a very low profile. The swing plate 252 has a thickness AA in Fig. 24 of about 12-25 mm. The hub 248 has a thickness or height BB in Fig. 24, of about 30 to 45 mm or 35 to 40 mm. The swing head 220 accordingly adds relatively little height to the vertical position of the camera. This can provide greater flexibility in positioning the camera as desired.

The swing plate 252 is locked against rotation because the inner end of the plunger 278 is engaged and held into one of the holes 272 by the plunger spring 280. The camera may be repositioned by pivoting or rotating the swing plate 252. This is achieved by pushing the back end of the lever 274 inwardly, causing the inner end of the plunger 278 to withdraw from the hole 272. With the plunger withdrawn, the swing plate 252 is free to rotate about the hub. When the swing plate 252 is rotated to the desired position, the lever 274 is released. The plunger spring 280 then drives the inner end of the plunger back into one of the holes 72. If the plunger is not precisely aligned with a hole when the lever 274 is released, slight additional movement in either direction will perform the alignment, with the spring moving the plunger into a hole 272 when the plunger and the hole are sufficiently aligned.

With the plunger 278 urged into a hole 272, the swing plate 252 is locked, with no discernible play. The spring 280 may have a high spring constant, so that the plunger is forcefully pushed into the hole 272. If the inner end 298 of the plunger 278 is tapered, or has a conical tip, and if the hole 272 has a complementary shape, the plunger 278 will securely lock the swing plate 252 against all movement, with no play. The lever 274 may have a long back section to provide sufficient leverage to allow the plunger to be withdrawn from the hole, without excessive hand force. For example, the back section of the lever 274, from the pivot pin 276 to the back end, may be 50-150 mm or 75-100 mm. Under high loading conditions or other circumstances, it is also possible to pull out on the lever 274, to further force the plunger 278 into the hole 272 of the hole ring 270 on the hub 248.

The release pin 282 and the cam 286 provide a release assembly 285 which may be used to hold the plunger 278 in a release position, without the need to continuously press the lever 274 inwardly. As shown in Figs. 25 and 26, the release pin is normally held in the out position by the release spring 284. When release pin is in the out position, the lever 274 may be pressed in to rotate the swing plate 252, and released to lock the plate.

To allow the swing plate 252 to rotate freely without holding the lever 274 in by hand, after the lever 274 is pressed inwardly, the release pin 282 is pushed in or up. Then, with the release pin in the in position, as the lever 274 is released, the release pin 282 moves into contact with the cam 286. Although the release spring 284 continues to urge the release pin 282 outwardly, the friction force between the cam 286 and the side of the release pin 282 holds the pin in the up or in position. As a result, the lever is held in the in or release position, and the plunger is pulled back from the hole 272 in the hole ring 270. The swing plate 252 can then rotate freely about the hub 248. The swing plate 252 may then be rotated while the camera is filming or recording, to perform a so-called "free head" shot. Specifically, the camera is moved in a panning type of movement, but with rotation about a fixed axis several cm (e.g. 10 to 20 or 24 cm) apart from the lens axis. The inner and outer bearings provide for a smooth and quiet swing movement.

The release assembly 285 is deactivated simply by pushing the lever 274 inwardly momentarily. As the lever 274 is pushed in, the release pin 282 moves away from the cam 286. The release spring 84 then moves the release pin 282 back into the out position, since the friction holding force exerted by the cam 286 on the release pin 282 is removed when the release pin 282 is not held into contact with the cam. Referring to Fig. 25, when the release pin 282 is in the out position, it is below the level of the cam 286. The lever 274 can therefore return to its original position, locking the swing plate.

## Claims

1. An isolator, comprising: a top plate (18) attached to a bottom plate (16) via a universal joint (15) that allows the top plate to pivot about two mutually perpendicular axes relative to the bottom plate;
a camera attachment fitting (30) on the top plate; and
at least two dampeners (40, 42) spaced apart from each other and attached to the top and
bottom plates; and with the dampeners (40,42) between the top and bottom plates,
**characterized by**
a threaded fitting (12) on the bottom plate, for attaching the isolator to a supporting structure; and by
at least two springs (34) spaced apart from each other and attached to the top and bottom plates; and with the springs (34) between the top and bottom plates.

2. The isolator of claim 1 wherein the dampeners and springs are combined into at least two dampener/spring elements, which hold the top plate parallel to the bottom plate when no shock or vibration is applied to the isolator.

3. The isolator of claim 1 with the universal joint including an axle ring (20) having a pair of lateral axles (22) aligned perpendicularly to a pair of longitudinal axles (22), and with the lateral axles pivotally attached to a pair of lateral arms (26) on the top plate, and with the longitudinal axles pivotally attached to a pair of longitudinal arms (26) on the bottom plate.

4. The isolator of claim 1 with the dampeners comprising first and second fluid dampeners (40, 42) having adjustable dampening.

5. The isolator of claim 4 with the first and second fluid dampeners connected via first and second fluid lines (76) to a first valve (72).

6. The isolator of claim 5 having four equally spaced apart springs, with each spring having a spring foot (32) attached to the bottom plate, and also having third and fourth dampeners (44, 46), with the first, second, third and fourth dampeners equally spaced apart, and with the third and fourth dampeners connected via third and fourth fluid lines (76) to a second valve (74).

7. The isolator of claim 1 or 5 with a ball swivel bearing (62) on an upper end of each dampener, with each ball swivel bearing having an inner ball (64) pivotally supported within a collar (66), and with a fastener (80) extending through a hole in the top plate and into the inner ball, and a set screw (60) in the top plate securing the collar to the top plate.

8. The isolator of claim 1 or 5 with each dampener having a piston (52) movable in a cylinder (50), and a single fluid port (58) in the cylinder.

9. The isolator of claim 1 or 5 with the springs aligned on a first diameter and the dampeners aligned on a second diameter larger than the first diameter.

10. The isolator of claim 6 with the first, second, third and fourth spaced apart springs compressed between the first and second plates, and with each spring between an adjacent pair of dampeners.

## Patentansprüche

1. Ein Isolator, mit
einer obere Platte (18), welche an einer unteren Platte (16) mittels eines Universalgelenks (15) angebracht ist, welches eine Schwenkbewegung der oberen Platte um zwei relativ zueinander rechtwinklig angeordnete Achsen relativ zu der unteren Platte ermöglicht;
ein Kamerabefestigungs-Fitting (30) auf der oberen Platte; und
wenigstens zwei Dämpfer (40, 42), welche im Abstand voneinander angeordnet sind und an der oberen Platte und unteren Platte befestigt sind,
**gekennzeichnet durch**
ein Gewindefitting (12) auf der unteren Platte, um den Isolator mit einer Stützstruktur zu verbinden; und
wenigstens zwei Federn (34), welche im Abstand voneinander angeordnet sind und an der der oberen Platte und unteren Platte befestigt sind, wobei sich die Federn (34) zwischen der oberen und der unteren Platte erstrecken.

2. Der Isolator nach Anspruch 1, wobei die Dämpfer und Federn in wenigstens zwei Dämpfer/Feder-Elemente kombiniert sind, welche die obere Platte zur unteren Platte parallel halten, wenn der Isolator keinen Stößen oder Vibrationen ausgesetzt ist.

3. Der Isolator nach Anspruch 1, wobei das Universalgelenk einen Axialring (20) aufweist, welcher ein Paar von Seitenachsen (22) aufweist, welches rechtwinklig zu einem Paar von Längsachsen (22) ausgerichtet ist, wobei die Seitenachsen (22) schwenkbar mit einem Paar von auf der oberen Platte befindlichen seitlichen Armen (26) verbunden sind, und wobei die Längsachsen schwenkbar mit einem Paar von auf der unteren Platte befindlichen Längsarmen (26) verbunden sind.

4. Der Isolator nach Anspruch 1, wobei die Dämpfer erste und zweite hydraulische Dämpfer (40, 42) aufweisen, welche in ihrer Dämpfung einstellbar sind.

5. Der Isolator nach Anspruch 4, wobei die ersten und zweiten hydraulischen Dämpfer mittels ersten und zweiten hydraulischen Leitungen (76) mit einem ersten Ventil (72) verbunden sind.

6. Der Isolator nach Anspruch 5, mit vier im gleichen Abstand voneinander angeordneten Federn, wovon jede Feder eine Federbasis (32) aufweist, welche an der unteren Platte angebracht ist, und mit einem dritten und einem vierten Dämpfer (44, 46), wobei der erste, zweite, dritte und vierte Dämpfer im gleichen Abstand voneinander angeordnet sind, und wobei der dritte und vierte Dämpfer mittels dritten und vierten hydraulischen Leitungen (76) mit einem zweiten Ventil (74) verbunden sind.

7. Der Isolator nach Anspruch 1 oder 5, wobei ein Kugelgelenk (62) an einem oberen Ende von jedem der Dämpfer angeordnet ist, wobei jedes der Kugelgelenke eine innere Kugel (64) aufweist, welche schwenkbar innerhalb eines Kragens (66) abgestützt ist, und wobei sich ein Befestigungselement (80) durch ein Loch in der oberen Platte und in die innere Kugel hinein erstreckt, und wobei eine Stellschraube (60) in der oberen Platte vorgesehen ist, um den Kragen an der oberen Platte zu befestigen.

8. Der Isolator nach Anspruch 1 oder 5, wobei jeder Dämpfer einen Kolben (52) aufweist, welcher innerhalb eines Zylinder (50) bewegbar ist, und einen einzigen Hydraulikflüssigkeit-Eingang (58) in dem Zylinder aufweist.

9. Der Isolator nach Anspruch 1 oder 5, wobei die Federn auf einem ersten Durchmesser und die Dämpfer auf einem zweiten Durchmesser angeordnet sind, welcher größer als der erste Durchmesser ist.

10. Der Isolator noch Anspruch 6, wobei die ersten, zweiten, dritten und vierten, im Abstand voneinander angeordneten Federn zwischen der ersten und der zweiten Platte zusammengedrückt sind, und wobei jede der Federn zwischen einem benachbarten Paar von Dämpfern angeordnet sind.

## Revendications

1. Isolateur comprenant :
une plaque supérieure (18) fixée à une plaque inférieure (16) par l'intermédiaire d'un joint universel (15) qui permet à la plaque supérieure de pivoter autour de deux axes mutuellement perpendiculaires par rapport à la plaque inférieure ;
un raccord de fixation d'une caméra (30) sur la plaque supérieure ; et
au moins deux amortisseurs (40, 42) espacés les uns des autres et fixés sur les plaques supérieure et inférieure ;
et les amortisseurs (40, 42) étant situés entre les plaques supérieure et inférieure, **caractérisé par**
un raccord fileté (12) sur la plaque inférieure, permettant de fixer l'isolateur sur une structure support ; et par
au moins deux ressorts (34) espacés les uns des autres et fixés sur les plaques supérieure et inférieure ; et les ressorts (34) se trouvant entre les plaques supérieure et inférieure.

2. Isolateur selon la revendication 1, dans lequel les amortisseurs et les ressorts sont combinés en au moins deux éléments formant amortisseur/ressort, qui retiennent la plaque supérieure parallèlement à la plaque inférieure lorsque ni choc ni vibration n'est appliqué(e) sur l'isolateur.

3. Isolateur selon la revendication selon la revendication 1, dans lequel le joint universel comporte une bague d'essieu (20) ayant une paire d'essieux latéraux (22) alignés perpendiculairement à une paire d'essieux longitudinaux (22), et les essieux latéraux étant fixés pour pivoter à une paire de bras latéraux (26) sur la plaque supérieure, et les essieux longitudinaux étant fixés pour pivoter à une paire de bras longitudinaux (26) sur la plaque inférieure.

4. Isolateur selon la revendication 1, dans lequel les amortisseurs comprennent des premier et deuxième amortisseurs à fluide (40, 42) ayant un amortissement réglable.

5. Isolateur selon la revendication 4, dans lequel les premier et deuxième amortisseurs à fluide sont reliés par l'intermédiaire de première et seconde conduites de fluide (76) à une première soupape (72).

6. Isolateur selon la revendication 5 ayant quatre ressorts espacés les uns des autres de manière équidistante, chaque ressort ayant un pied de ressort (32) fixé sur la plaque inférieure, et ayant également des troisième et quatrième amortisseurs (44, 46), les premier, deuxième, troisième et quatrième amortisseurs étant espacés les uns des autres de manière équidistante, et les troisième et quatrième amortisseurs étant reliés par l'intermédiaire des troisième et quatrième conduites de fluide (76) à une seconde soupape (74).

7. Isolateur selon la revendication 1 ou 5, dans lequel un pivot à rotule (62) se trouve sur une extrémité supérieure de chaque amortisseur, chaque pivot à rotule ayant une bille intérieure (64) supportée, pour pivoter, à l'intérieur d'un collier (66), et une attache (80) s'étendant à travers un trou prévu dans la plaque supérieure et dans la bille interne, et une vis de serrage (60) dans la plaque supérieure assurant le collier sur la plaque supérieure.

8. Isolateur selon la revendication 1 ou 5, dans lequel chaque amortisseur a un piston (52) mobile dans un cylindre (50), et un unique orifice de fluide (58) dans le cylindre.

9. Isolateur selon la revendication 1 ou 5, dans lequel les ressorts sont alignés sur un premier diamètre et les amortisseurs sont alignés sur un second diamètre plus grand que le premier diamètre.

10. Isolateur selon la revendication 6, dans lequel les premier, deuxième, troisième et quatrième ressorts sont espacés les uns des autres, et comprimés entre les première et seconde plaques, et chaque ressort se trouve entre une paire d'amortisseurs adjacents.
